Europäisches Patentamt

European Patent Office

Office européen des brevets

(19)

(11) EP 1 215 901 A1

(12) EUROPEAN PATENT APPLICATION

(43) Date of publication:
19.06.2002 Bulletin 2002/25

(51) Int Cl.⁷: H04N 7/16, H04N 7/173

(21) Application number: 00830808.2

(22) Date of filing: 07.12.2000

(84) Designated Contracting States:
AT BE CH CY DE DK ES FI FR GB GR IE IT LI LU
MC NL PT SE TR
Designated Extension States:
AL LT LV MK RO SI

(71) Applicant: e-Seed Telecommunications S.p.A.
20144 Milano (IT)

(72) Inventors:
• Bottigelli, William
  29100 Piacenza (IT)
• Giuliani, Ivo
  00188 Roma (IT)

(54) **Method and system of interactive television, possibly stimulated by telephone call**

(57)  Interactive television system including a profile server controlled by a provider having mainly advertisement multimedia contents, broadcast via VBI channel (Vertical Blanking Interval) to a plurality of users differently located over the territory and additionally connected to the profile server via modem on telephone 2-wire loop. Each user has a DATA COLLECTOR (set-top box) connected to the household television set to receive and decode the Teletext signal sent by the provider; including also a full-duplex modem connected to the PSTN network. The interactions made by each user, through remote control, on the service contents that can be enjoyed on the TV screen are stored and sent during the night to the profile server, where they are processed for the updating of a user individual profile. Also during the night, the updated profiles are re-transmitted to the users, who employ them to filter the contents received on the VBI channel. The DATA COLLECTOR includes a telephone interface connected to the microprocessor governing the tuning of the channel and the main functions of the DATA COLLECTOR. The telephone interface includes a handset off hook detector. When the user lifts the handset, the off hook detector starts (if enabled) the tuning on the channel of the provider in Teletext mode, and the advertisement contents begin scrolling on the TV screen. Randomly, gliding golden tokens appear on the screen and these can be captured with the remote control to acquire free minutes of telephone conversation (fig.2)

FIG.2

EP 1 215 901 A1

**Description**

**Field of the invention**

The present invention relates to the field of interactive television systems and more in particular to an interactive television method and system, possibly stimulated by a telephone call.

**Background art**

In the sector of the technique indicated in the previous paragraph, the VBI channel (Vertical Blanking Interval) is commonly used both by the broadcasters of the television channel themselves to send Teletext information, and by the suppliers of services addressed to the user who obtain the utilization of this channel to convey their offer. As it is already known, the VBI channel avails of the frame return time of a standard television signal to transmit data on the line signal, which would otherwise remain unused. The opportunity offered by the VBI channel has been firstly used by the broadcasters themselves to diffuse texts of the TV programming on the concerned channels, together with the news and topical items. To this purpose an international standard called Teletext has emerged, specifying the transmission protocol of a string of eight bit bytes in the VBI interval, organized in a page of 24 lines of 40 characters each. The transmitter telecasts the pages in sequence and continuously, cyclically repeating them at regular time intervals. The receiver can only select the page to display and shall wait for a time varying from zero to the cycle time. The receiver consists of a television set including a Teletext adapter and a remote enabled electronic switch, switching to the screen for the display or the images of the normal television program, or a Teletext page, better known in Italy as Televideo.

A guide to the TV programming diffused via Teletext is scarcely interactive, in practice the user shall limit to digit a page number with the remote control, press enter and wait. The need to offer a scheduling to the most interactive TV programs in respect with the Teletext, led to the definition of a tool known with the English acronym EPG (Electronic Program Guide). An EPG guide is an electronic guide to television programs appearing as an image on the TV screen in the form of a PIP table (Picture In Picture). The table includes the scheduling of the programs over one or more days. Different display options are usually available. In general, for each channel of the guide the channel name, the title of the program broadcast, the start and end time of the transmission appear, together with possible information connected to the program. Simultaneously to the records of the guide, static or animated advertisements generally appear. In the major part of the European countries this tool is not so diffused, notwithstanding its need is sensed by the viewers and by the marketing world (TV advertisers). Through the EPG guide a viewer can have, for instance: an overview of the TV programs scheduled on all the channels in a given time interval, he or she can receive at a higher detail degree the scheduling of a single channel, analyze the scheduling of the channels corresponding to the bucket of its subscription, or click on the records of the guide to know which are the actors of a film, or the kind of representation, or other. He or she shall no doubt click to select a program to view at the time of its scheduling, or to plan the video-recording of any program. Therefore, the guide offers the user the possibility to easily and quickly move among channels and programs, and at the same time offers the broadcaster the possibility to record the interactions made by the user on the visual means when he or she selects the programs for their view or recording. Interactions stored reflect the preference of those who express them, and therefore represent the basis to detect the individual audience profiles.

The determination of the user profiles has been firstly employed by the broadcasters to propose an EPG guide where the program scheduling could be tailored on the preferences of each single user.

However, these modest aims have not been determinant in the progress of interaction means. The true revolution occurred only when the marketing world understood the intrinsic value of the user profiling. In fact, profiles represent the "virtual personality" of the viewers, built on a completely automatic way on the preferences expressed in the audience. After appropriate processing, the profiles can be translated into profiles of possible purchasers for product classes to which address an on purpose advertisement, or even direct purchase proposals.

Different electronic industries, mainly North American, have then pressingly entered the sector and have faced the problems of the interactive TV in a scientific way, both on the mathematical side and on the system architecture one. With the advent of the digital satellite TV, the traditional VBI channel has been replaced by audio/video sub-channels diffused by the MPEG-2 signal (Moving Picture Expert Group), but we are still far from the end of the utilization of the VBI channel, which continues to be employed in the ground diffusion TV. Moreover, with the endless growth of Internet, the possibilities offered by the navigation in the Web space have been integrated in the interactive TV systems, re-powering the relevant performances.

A first example of application of the concepts highlighted is included in the PCT application published under No WO 0049801, under the title: "SYSTEM AND METHOD FOR TAILORING TELEVISION AND/OR ELECTRONIC PROGRAM GUIDE FEATURES, SUCH AS ADVERTISING", in the name of INDEX SYSTEMS INC. The application describes a system for the generation of an electronic guide EPG stuffed with advertisements, emphasizing the confidential character of data profiled that remain confined to the local client device. At the broadcasting point, the information content (advertising or EPG program scheduling) to diffuse to the users, is divided into packets fit with a relevant header that identifies the class the packet belongs to and a SIP information field (Show Information Package). The class enables, for instance, to associate the advertisement to a relevant profile. If the video signal is of the analogue type, the packets are included in the transmission video signal, preferably in VBI mode, otherwise the MPEG-2 channel is used. The receiver of the set-top box type includes the following functional blocks: a tuner, a demodulator, a decoder for the extraction of the VBI/MPEG-2 packages from the demodulated signal, a processor of the audio/video signal, a microprocessor monitor with loudspeakers and relevant remote control, a memory of advertising packages, a memory of the user profile, a memory for the database of the EPG guide. The different blocks of the receiver are connected to the bus of the microprocessor. The packages of the EPG guide include timer fields enabling to properly organize the content of the relevant memory and trace the scheduling data. The microprocessor continuously updates the content of the memory of the user profile, and on the basis of the updated profile filters the memory content of the advertisements, or of the EPG guide, or both the contents, obtaining an integrated information for the updating of the EPG electronic guide and of the relevant advertisements. The integrated information is sent to the audio/video processor, which shows the guide and the programs on the television screen in PIP mode. The software for user profiling makes recourse to a probabilistic model called with the PBPP acronym (Probability Based Psychological Profile) capable to handle the three inconsistencies existing in any data collection process: (a) inconsistency in definition, (b) inconsistency in quality, (c) inconsistency

in sampling. The sub-set of the information transmitted reaching the user is obtained through a probabilistic coupled filter process that lets through only the information set whose content has the highest score in a formula that considers the preference expressed by the user and summarized in his or her PBPP profile. The text explains how to build on statistical bases the PPBP profile of a person and which are the relevant properties. In short, it is defined as a current average of the "scores" that a person receives weighted with the view duration of a show. As the number of shows viewed increases, the statistical information contained in the PPBP profile increases as well, until it takes the role of "virtual personality " of the observed user, limited to the aims of the television audience. The profile thus obtained can still be improved on the basis of the psycho-demographic information associated to television programs. This information is included in a database kept by the provider of the EPG electronic guide and is sent to the users according to the above mentioned methods.

A second example of application of the concepts highlighted is included in PCT application published under No WO 98/55091, under the title: "DIGITAL TELEVISION SYSTEM WHICH SELECTS IMAGES FOR DISPLAY IN A VIDEO SEQUENCE", in the name of PHILIPS AB. The application discloses an interactive digital satellite television system (MPEG-2). The system broadcast transmits a coded signal MPEG-2 including the video sequences of one or more television programs, alternated with advertisement announcements; the digital audio signal includes the audio associated to the corresponding portion of the video signal. The images (and the coded audio AC3) of each alternative advertising and non-advertising announcement, are transmitted together with the identification data that enable the set-top box to recognize the images as such during the image selection process, and send them to the TV screen. The set-top box receiver includes all the necessary elements to perform the following functions: tuning, demodulation, demultiplexing of demodulated packages for the distribution among video decoder, audio decoder, and CPU for the data referred to advertisements, processing of digital images and their representation on the screen, sound amplification, firmware execution, calculation and/or storing of user profiles, execution of application programs, editing, interfacing among software modules, communication via modem with an advertiser, interfacing with the remote control. The application programs can be of the "built in" type or modem transferred. Examples of applications included in the digital receiver are those for the realization of an electronic guide (EPG), and the so-called closed-captioning ones (CC), which represent the top in the on-purpose advertising industry. The editing function receives, or draws up, a user profile, stores it in a RAM, selects one of the alternative images of the advertising announcements among those supplied by the demultiplexing function and sends it to the processor that controls the images on the screen. The user profile includes specific information on the television attendance habit; generic information, and demographic information. Data listed can be differently combined among them. Concerning the methods to obtain the profile, PHILIPS AB invention offers highly possibilities; in fact, the following methods are foreseen:

- Filling in an on-screen questionnaire using the remote control;
- Profile obtained at a location outside the digital television and therefore sending of the profile via modem to the digital receiver;
- Automatic generation by the CPU inside the set-top box, which records the attendance habit of the user;
- Combination of the previous methods.

The editing function of the digital receiver implements the scope of PHILIPS AB invention. In detail, the packages received by the CPU, being labeled as advertisement, include all the alternative packages sent to all the users listening over the whole territory. The editing selects those, the label of whom matches a field contained in the user profile. The following are application possibilities relevant to the telecasting of diversified advertisements on the basis of criteria that associate the individual profiles of the service users. For instance: a) a profile of race car fans with distinctive elements represented by the presence of children or not; b) voice listening in different languages according to the linguistic area reached by the broadcast signal; c) powering of the subliminal publicity through "product placement" addressed to the context appearing on that moment on the TV screen; etc.

The Applicant deems that examples described above are among the most significant ones, selected among a number of other examples examined. All the examples known seems to indicate a hardware structure rather consolidated around a set-top box fit with means to select the broadcast information on the basis of a user individual profile calculated within the set-top box, or in a central point where the service provider resides.

These systems generally privilege the confidentiality to the detriment of higher costs of the set-top box, due to the local profiling software dimensions. Moreover, they are addressed to a vast public essentially unknown. Undoubtedly, confidentiality has a fundamental importance in a delicate sector, but it is also true that the service provider can stipulate with the users a contract for the full assumption of responsibility for the disclosure, even accidental, of confidential information. In this case the cost of the system would be globally reduced, and a central profiling software could be used considerably more powerful than a software residing in the single set-top boxes.

The systems of the known art examined before, though they greatly emphasize the determination of the user profile, have the drawback that they do not incite adequately the user to enjoy the contents of the service tailored with that profile. This is true for the systems of the known art in general. This drawback represents a restraint to their use for the diffusion of television advertisement segmented over the users, particularly by the advertisement providers who are assigned the use of the VBI interval of a frequency channel (sometimes only few lines of the VBI channel), which forcedly result marginal in the band utilization of a broadcast channel.

The prevailing reality in the television advertisement world is the one where the broadcaster coincides with the advertiser. In this perspective, the non-targeted television advertisement, that is that interrupting the normal programming of television shows, prevails the on-purpose one, even if the latter avails of the advanced profiling techniques. To reduce the difference between marginal advertiser and dominant advertiser incentives are necessary to the view of the VBI channel rather than the main one. However, the incentive alone would not be sufficient, since human beings are fundamentally habit-bound and would forget it soon. Means capable of stimulating the memory of the viewer or of the simple subscriber to the fruition of the service are therefore necessary. The incentive shall also be equated to the duration of the actual fruition of the service; otherwise costs to support would be unjustified. It is therefore necessary to use means enabling a measurement of the duration of the actual fruition. The presence of all the means listed above seems not to be evident in the systems of the known art, globally examined by the applicant.

## Objects of the invention

Therefore, scope of the present invention is to overcome the drawbacks of the known art highlighted above, and to indicate a method and an interactive television system on the VBI channel, or equivalent digital sub-channels with the same band restrictions, whose interactivity degree with the television means is adequately strengthened and boosted.

## Summary of the invention

To attain these objects, scope of the present invention is an interactive television procedure, as disclosed in claim 1.

A further object of the invention is an interactive television system applying the method disclosed in claim 1.

An outstanding technical characteristic of the invention, as it results from the appended claims, is to implement a loyalty mechanism based on the capture of credits. The preferred form is to allow credit tokens gliding along the TV screen, aside the contents, randomly emitted and disappearing as soon as they reach the end of the screen.

Further scope of the invention is an embodiment foreseeing to connect the capture of tokens to a telephone call originated, as described in a relevant appended claim. An immediate consequence of the invention and of its additional embodiment is to allow the navigation on the service contents that can be enjoyed on the TV screen, even at the end of the telephone connection under way, maintaining the tokens mechanism and the interactivity on the contents active.

A technical characteristic of the invention, described in an appended claim, is that to allow the user to select to enable or exclude, at will, the use of the phone for the fruition of the service contents on the television screen, tokens included.

**Advantages of the invention**

The teaching of the present invention is particularly suitable to satisfy all the needs highlighted about the requirements an interactive television system would have to be agreeable to a marginal provider of advertisement services. In fact, having foreseen a loyalty mechanism based on the capturing of credits (that can be otherwise spent) connected to the active fruition of the advertising service profiled on the VBI channel, represents in itself a big incentive to deviate part of the traditional audience towards the new opportunities offered. Once the user has chosen to "navigate" on the contents of the VBI provider, the system is able to maintain the attention threshold on contents high. This is due to the particular emission mode of the credit tokens, whose random character together with the limited time of staying on the screen, actually prevents a tuning of the attention on the passage of the credits, to the detriment of the attention on contents. Unless the user is alert on the contents offered, then he or she will quickly capture the tokens with the remote control to receive compensation, and soon he or she will find the thing useful and amusing.

A loyalty mechanism, particularly interesting for its intrinsic characteristics to allow the captured token to be "immediately" spent, is established by the combination of the telephone set to the means enabling the service fruition though the TV screen. In this perspective, the determination of the prize results automatic, which would coincide with the freeing of the telephone call cost for the time elapsing between a captured token and the instant the next one appears. The duration of a telephone call is a quantity that can be easily measured and charged. The combination of telephone and television resources represents a combination capable of adequately stimulating the memory of the users on the existence of the service on the VBI channel. On the other hand, limited to the sole combination to the telephone set, the user shall firstly make acquainted with the new scenario, but as the time goes by he will find that this fruition mode is familiar.

The philosophy adopted by the system of the invention is to let the user completely free to enable or disable, at will, the use of the telephone set at the start of the service on the VBI channel, and the consequent attribution to the telephone connection of the tokens captured on the TV screen. This represents an undoubted advantage, boosted by the fact that the switching between the two modes can take place at any moment, that is, both during a call with contextual navigation, and in the normal navigation with the exclusion of the telephone context from the service, or even in lack of navigation and telephone context. An interesting consequence is that, having enabled for instance the option on the telephone context, at the end of the call the system offers the user the possibility to remain connected to the service, and continue to navigate maintaining the tokens mechanism active and the interactivity on contents.

Of course, the recording of an interaction on the contents of the image does not depend on the type of content thus "captured ", and stored in a memory basket at the user's disposal. The user makes a particular capture guided by his comprehension of the context. This means that it is up to the provider to supply semantic contents to the context that can be enjoyed on the screen. This offers great freedom to the promotional initiative of the provider who can, for instance: propose an EPG electronic guide for the profiled scheduling of TV programs, make questions on the possible pleasure of some products shown in a catalogue, propose a virtual visit to an exhibition or to an art exhibition, directly propose a purchase with transaction on credit card, ask to record preferences on advertisement messages, propose the subscription to magazines or newspapers, propose travels or shows, and a number of other promotional and commercial activities. It is only up to the provider's imagination to define how to better employ the token mechanism that the system makes available.

In conclusion, the system of the invention, thanks to the loyalty mechanism, possibly extended to the telephone connection, offers higher interaction opportunities with the television means, and therefore with the service round the clock. This means that the duration of each session is increased on the average, thus making the advertisement profiled on the users competitive in respect with the undifferentiated one of the monopolist broadcasters. As a consequence of the above and of the fact that the central provider knows the personal details of the users, a difference with respect to the interactive TV systems based on the anonymity, the system of the invention is also more suitable to the telemarketing, since it can deliver purchase proposal directly to the single user and receive the relevant transactions. The greater aptness to telemarketing makes the system of the invention competitive even in respect with Internet business methods, which materialize in the so-called E-commerce.

**Brief description of figures**

The present invention, together with further objects and advantages thereof, may be understood with reference to the following detailed description, taken in conjunction with the accompanying drawings, in which:

- **Fig. 1** shows a general view of the interactive television system according to the invention;
- **Fig. 2** shows a more detailed view of the system in Fig. 1;
- **Fig. 3** shows an equivalent circuit greatly simplified of a telephone set TEL visible in Figures 1 and 2;
- **Fig. 3a** shows a detail of the Telephone Interface block included in the DATA COLLECTOR block of Fig. 2;

- **Fig.4** shows a general flow chart of the processing made by the PROFILE SERVER block in Figures 1 and 2;
- **Figures 5 to 9** show some operation flow chart of the system represented in Figures 1 and 2.

**Detailed description of some embodiments of the invention**

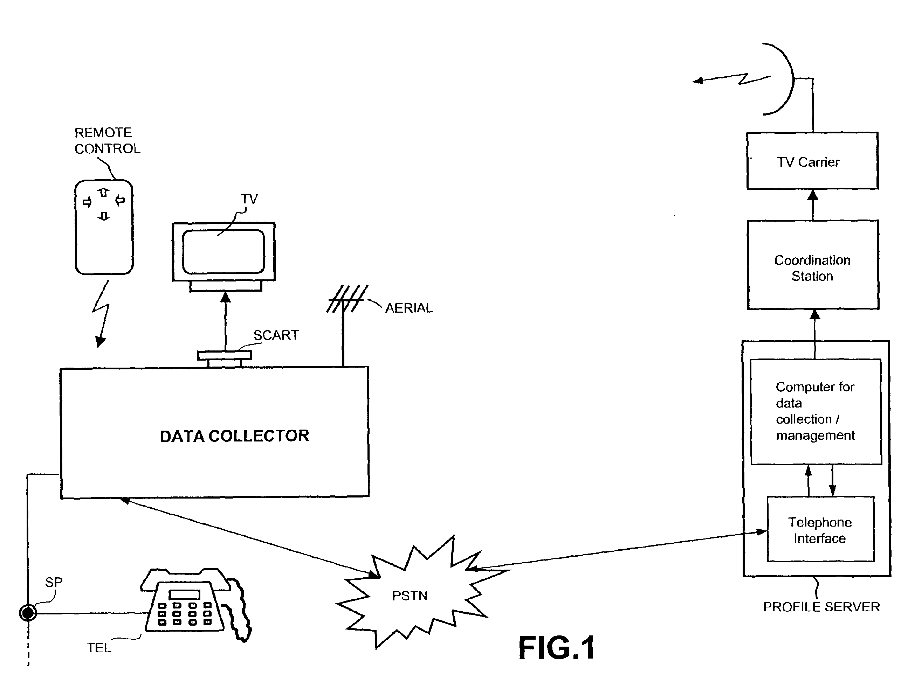

With reference to Fig.1, a PROFILE SERVER block can be noticed, which is connected to a PSTN (Public Switched Telephone Network) telephone on one side, and to a COORDINATION STATION block on the other side, connected in turn to a TV CARRIER block for the broadcast diffusion of one or more terrestrial or satellite television channels. A DATA COLLECTOR block is also connected to the PSTN network, additionally connected to an AERIAL antenna for the reception of the television signal in the broadcast band, to a telephone set TEL (through multiple SP socket), to a television set TV, and to a REMOTE CONTROL (remote control) via radio or infrared.

In detail, the DATA COLLECTOR block, complete with telephone set TEL, television set TV and REMOTE CONTROL forms a local station of a typical subscriber of the service offered by a service centre represented by the PROFILE SERVER block. The service offered consists in the diffusion of multimedia contents, in a non-restrictive manner of advertising nature, irradiated with the television signal that the user receives through the AERIAL antenna and displayed on the TV screen. The CONTENT PRODUCTION block included in the TV SERVER block represents the activity developed by the producer of the multimedia contents, indicated also here after with the English synonyms of service provider, or advertiser. The advertiser generates the multimedia contents operating as an editorial structure having as input the information on the users entered in a database DB, integrated with the indications received, for instance, from the marketing world. The above mentioned multimedia contents are sent to the centre that co-ordinates the integration of the service in the video signal, represented by the CO-ORDINATION STATION block, for their insertion in the VBI channel of the analogue TV or in equivalent sub-channels MPEG-2 in case of digital satellite TV. For sake of simplicity, we shall deal hereafter only with the VBI channel. Multimedia contents refer to the data coming from: fixed or moving images, monophonic or stereophonic musical signal, voice, texts, applications, etc. These data are transmitted using a particularly effective proprietary protocol, resting on the existing Teletext protocol. The connection between the PROFILE SERVER and COORDINATION STATION blocks occurs, for instance, on a high-speed data transmission line. The centre performing the functions of the COORDINATION STATION block is conveniently located in the premises of the television broadcaster represented by the TV CARRIER block.

The production and broadcasting of the service contents requires an exchange of information coordinated in the two communication directions between the DATA COLLECTOR and PROFILE SERVER blocks through the PSTN. Data automatically sent by the user's DATA COLLECTOR to the service provider comprise of the daily recording of the interactions made with the remote control REMOTE CONTROL on the contents of the service displayed on the TV screen. The information automatically sent by the PROFILE SERVER to the user consists in the updated profile and in a possible update of the local software that enables the user with a better profile to select the multimedia contents which are more suitable to the same. This applies of course to all users. The telephone connection with the DATA COLLECTOR is an innovation introduced by the present invention to expand the system interactivity and encourage the service fruition. The automatic communications between the DATA COLLECTOR and PROFILE SERVER blocks can profitably make use of the added value services made available by the Intelligent Network, such as: Green Number and mass calls.

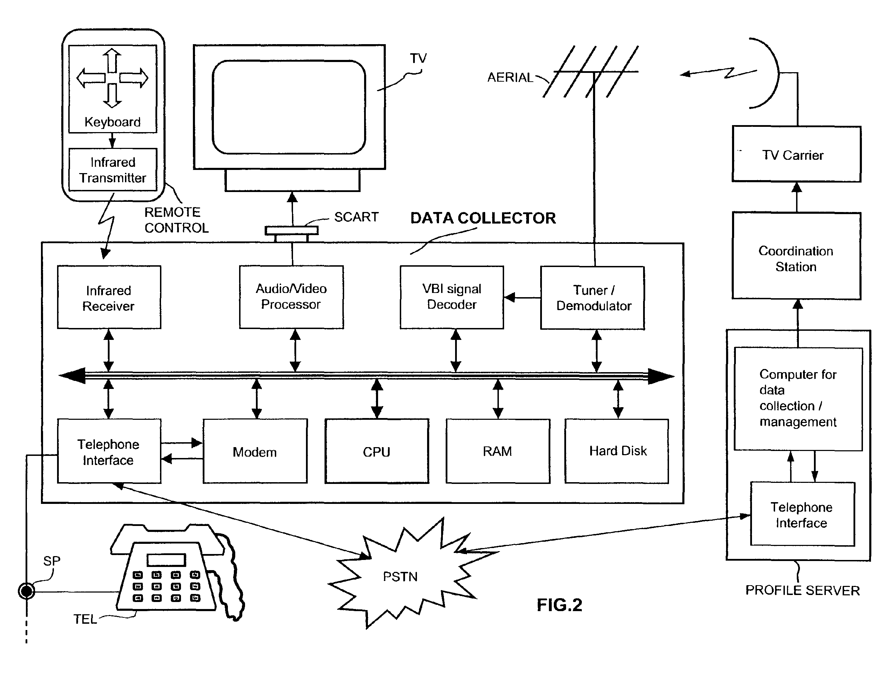

With reference to Fig.2, we see in greater detail the blocks of Fig.1. In particular, the DATA COLLECTOR block includes in turn the following blocks: a microprocessor CPU and relevant RAM, a fuil-duplex Modem, a Telephone Interface, an Infrared Receiver, an AudioNideo Processor, a Tuner/Demodulator, a VBI signal decoder, and a Hard Disk. The CPU microprocessor is connected through its bus to the internal blocks to the DATA COLLECTOR to control the same. Other connections exist between the Modem and the Telephone Interface, and between the latter and the PSTN, between the Tuner/Demodulator and the VBI signal decoder, between the Audio/Video Processor and a SCART socket for the connection with the television set TV, between the telephone set TEL and the Telephone Interface (via SP multiple plug), between the REMOTE CONTROL and the Infrared Receiver. The block includes an Infrared Transmitter connected to a Keyboard with keys for the interactive navigation on the TV image of the contents broadcast by the service. Conveniently, a single remote control device common to TV and DATA COLLECTOR can be envisaged.

In a remote position with respect to the DATA COLLECTOR, the PROFILE SERVER block includes its Telephone Interface, connected to the PSTN and a "Computer for data collection / management" block. The remaining blocks are not detailed, since they are not at the service provider's charge, and considered as known.

The implementation of the DATA COLLECTOR block is that of a Motherboard suitable to host the selected CPU processor, with what is required for its operation. As regards the elements forming the DATA COLLECTOR block, possible components easily obtainable from the market are listed below.

| Motherboard | Motherboard compatible with defined CPU (66 MHz bus). |
| --- | --- |

(continued)

| CPU | 233 MHz Processor (minimum) (Cyrix or equivalent). | |
|---|---|---|
| RAM | 32 Mbytes. | |
| VBI decoder | As a card connected to the Motherboard including: | |
| | Tuner / Demod. | Philips FI 1216 MK2 or equivalent, |
| | Decoder | chip for the decoding of the Teletext signal, Philips SAA 5284 GP type or equivalent, |
| | microcontroller | microprocessor of the 8051 type with RAM. |
| Infrared port | Infrared port for communication with external peripherals. | |
| VGA Interface | video interface integrated on the motherboard, chip VGA, 2MB video memory, SCART output in CVBS mode (PAL). | |
| Sound Interface | Sound Interface integrated on the motherboard compatible with Sound Blaster 16. | |
| Power Connector | HV standard power connector. | |
| Modem | 28.8 kbit/s with line-in and line-out (RJ-45) integrated on the motherboard and capable to detect on-hook/off-hook events, | |
| Hard Disk | IDE 2GB (noiseless essential). | |

As far as the hardware operation is concerned, it must be pointed out that the DATA COLLECTOR block is set for the reception of an information fractionated in data packets, including a relevant header identifying the class to which the packet belongs. The class enables to associate the advertisement to a relevant profile. The header includes also one or more selection fields, which allow to address the packet to particular groups of users within a class, or even individually. The broadcaster represented by the TV carrier block undertakes to include the packets of the VBI channel in the corresponding intervals of the transmission video signal. The palimpsest of the VBI channel is kept unchanged for the whole broadcast interval having predefined duration, afterwards it is updated and included again in the VBI channel, and so on, in a cyclical way for an undetermined time.

The user, tuning on the channel pre-set by the service provider, can switch on the reception of the Teletext signal to access the multimedia contents offered by the service typology. Digital data generated coinciding with the above mentioned multimedia contents are stored in the Hard Disk, where they will update the previous data. The broadcast on the VBI channel can be repeated several times over the 24 hours, consistently with the quantity of advertisements to diffuse, enabling a dynamic connotation to the delivery of the information. Updating intervals of the user profiles necessarily have a slower cycle, since the establishment or the updating of a profile requires a considerable interval for the observation of interactions originated by said profile. The systematic choice is to update the profiles every 24 hours, preferably during nightime. To this purpose, the interactions made by the user with the remote control on the video contents of the service are recorded in a temporary file in the Hard Disk. Upon expiration of the term foreseen, the file is automatically read by the CPU and transferred to the service provider through the Modem. In dual mode, the updated profile is transmitted by the service provider to the user, through the Telephone Interface included in the PROFILE SERVER block. This transmission can be made after the reception of the new interactions. The user CPU receives the new profile through the Modem, and updates the relevant profile file stored in the Hard Disk. To save transmission time it is convenient that the PROFILE SERVER transmits only the profile variations. There is a substantial difference between the Telephone Interface included in the DATA COLLECTOR and the Telephone Interface included in the PROFILE SERVER block. The first operates in order to solve the conflicts between the Modem and the telephone set TEL when they arise in the 2-wire loop contest, while the latter must control the reception from a multiplicity of users towards a single communication bus towards the "Computer for data collection / management" block, and vice versa.

The DATA COLLECTOR is fit at first with an application residing in the Hard Disk, capable of filtering the packets received on the VBI channel in order to capture and store, in the Hard Disk, only the packets whose selection fields in the relevant header can be associated to the user profile. As already said, the filter application can also be updated during the broadcast transmission. Before introducing the operations software of the whole system, it is necessary to supply a description of the profiling software characterizing the operation of the PROFILE SERVER block.

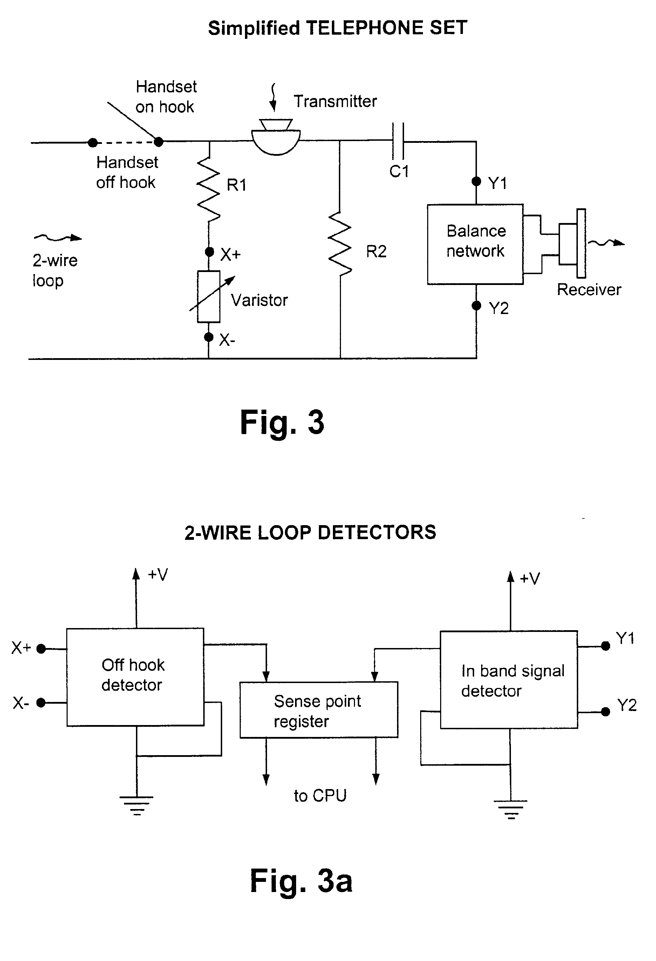

Fig. 3 shows an equivalent simplified circuit of the telephone set TEL, in order to show possible interface points between the phone and the Telephone Interface inside the DATA COLLECTOR. With reference to Fig.3, a telephone copper twisted pair (2-wire loop) can be noticed, which is interrupted in the upper part by an electric contact in the open position, corresponding to the condition of handset on-hook (on hook); for completeness, the close position of the same contact is also indicated with a dotted line, corresponding to the off-hook handset condition (off hook). Bridging the 2-wire loop, downstream the contact, a set of a resistor R1 with a varistor (Varistor) is installed, and on the continuation of the 2-wire loop a microphone (Transmitter) is installed in series followed by a resistor R2, also bridging the 2-wire loop. Downstream the resistor R2, a capacitor C1 is placed in series with the 2-wire loop, followed by a balancing network terminating the 2-wire loop and supplying a receiver (Receiver) with the voice band signal. When the handset is off hook, the direct current circulates in all the elements placed upstream the capacitor C1, uncoupling the circuits placed downstream from the direct current. The balancing network and the receiver are interested only in the signals in voice band (300 to 3.400 Hz), from speech or multifrequency tones during the dialing phase. The two varistor terminations X+ and X-, as well as two points Y1 and Y2 of the balancing network, form pairs of points affected by relevant currents, or voltages to monitor.

**Fig. 3a**, shows a circuit called 2-WIRE LOOP DETECTORS, included in the Telephone Interface block of the DATA COLLECTOR. The circuit includes an Off hook detector block, a Sense point register block, and an In band signal detector block. The three blocks are supplied between a voltage +V and ground. The Off hook detector block has two inputs connected to points X+ and X- of the varistor of fig.3, a first output connected to ground, and a second output connected to a first input of the Sense point register block. The In band signal detector block has two inputs connected to the points Y1 and Y2 of the balancing network of fig.3, a first output connected to ground, and a second output connected to a second input of the Sense point register block. The latter has two outputs coinciding with the two inputs meeting together on the bus of the CPU processor. In operation, the Off-hook detector block includes a sensor of the off hook status of the handset off hook detector sensing the current circulating in the varistor of Fig.3. This circuit is also suitable to monitor the dialing phase in the case of old telephone sets performing the decadic pulse dialing. The In band signal detector block includes a band pass filter letting the voice band through (300 ÷ 3.400 Hz) and a rectified voltage detector at the filter output. This circuit is suitable to monitor the dialing multi-tone phase and the conversation status on the 2-wire loop.

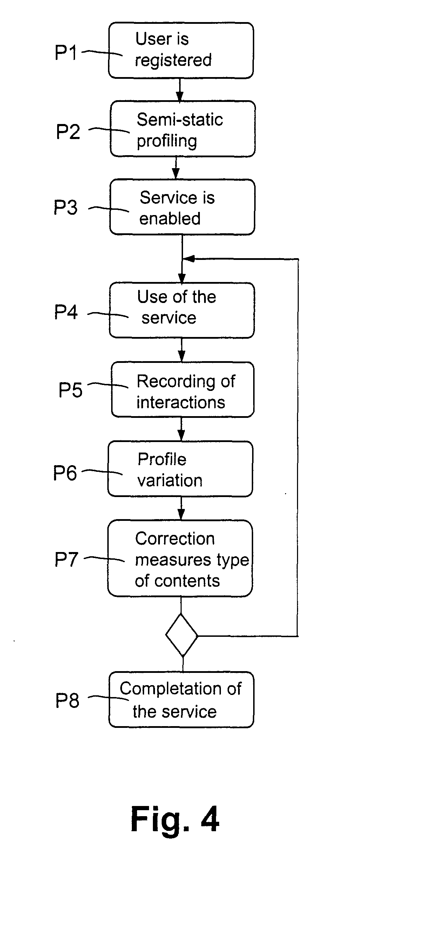

**Fig. 4** gives the diagram of the succession of operations made by the DATA COLLECTOR and PROFILE SERVER blocks concerning the generation and updating of the user profiles, and their utilization. Before describing Fig.4, it is appropriate to introduce the fundamental aspects of profiling. This will be helpful to understand the nature of the software present in the two blocks, in particular in the PROFILE SERVER.

The fundamental steps defining the aspects of profiling refer to the definition:

**A.** of the characteristics of the final user;

**B.** of the *profiling targets* in this case represented by the contents transmitted to the final user.

As for the elements unambiguously recognizing the service user, the important data to the purposes of the identification of its behavior are:

- social-demographic characteristics,
- geographic characteristics and/or concerning the residence,
- family composition.

These elements should be acquired at the time of service subscription. The main feature of this *profiling* segment, that we shall call *semi-static profiling*, is represented by its slow variation in time, that is, sociologic and behavioural characteristics vary, in general, more slowly than preference expressed on the broadcast contents. The elements defining the *profiling targets* are:

- the *type,* which is a multidimensional classificatory variable, that is, it assumes as many values as are the types of contents proposed,
- the number of contents with which the final user interacts, or *interactions,* that on the contrary is a simple numeric variable that can be translated in a group of time sets.

Following this *profiling* structure, it appears evident that the variables defined as: *type* and *interaction,* depend on the *semi-static profiling*. On the starting time, $t_0$, when the user subscribes to the service , a classification is made on the basis of the social-demographic, geographic characteristics, and of the features relevant to the family composition. During the operation period, the use of the service shall be detected, at different time instants ($t_1, t_2, ..., t_n, ...$), by recording the number of interactions made by the single user for each type of content proposed. Information of different nature could be stored together with these data, but always concerning the type of utilization of the service itself. In practice a vector variable $\bar{u}_k(t)$ shall be assigned to each user, which in general shall vary in time according to the mode the service offered is employed. This variable, univocal for each user, shall be of the type:

$$\overline{u}_k(t) = \left( u_k^1,...,u_k^q, \sum_t T_{k,t}^1,..., \sum_t T_{k,t}^s, \sum_t N_{k,t}^1,..., \sum_t N_{k,t}^p \right)$$

where the sub-system $(u_k^1,...,u_k^q)$ defines the *semi-static profiling,* while the summations of the

$$\sum_t T_{k,t}^h$$

type made on a time space defined in advance, represent the number of the time the user has viewed a content of the $T^h$ type (h is the dimensional index of the content typology); finally the summations of the

$$\sum_t N_{k,t}^m$$

type made on the same time space, represent the sum of interactions made by the user concerning a given segment of interest, for instance the interactions performed from the start of service operation (in the home where it is installed) in relation to the credits acquired, or in relation to the additional information requested on particular types of contents, etc.

With reference to **Fig.4,** a diagram of the *profiling* dynamic is now described, starting from step **P1** where the user accepts the conditions of the service and is registered. In the next step **P2** the registration data, together with additional data not subject to short-term variations, work together in forming a *semi-stafic profiling* of the user. Service is enabled at step **P3.** The service is characterized by a repetitive profiling cycle including steps **P4 to P7.** Step **P4** refers to the comments made by the user on the proposed contents. Step **P5** refers to the recording of interactions made by the user on multimedia contents following to the comments of step **P4.** The above mentioned recordings are added to those of the previous navigation sessions, so that, as the time of overall use of the service increases, the system is able to accumulate preferences, interactions, utilization types operated by the user. Consequently, each single profile $\overline{u}_k(t)$ is subject to a continuous updating.

When the profile *database* is adequately populated (concerning the single profile considered), in terms of preferences expressed by the user in the utilization of the service, the utilization forecast module is activated. Namely, for each single time series given by the variables $T^h$ or $N^m$, and in relation to each single user, a forecast analysis of the future values of the variables themselves is made. Hence, in practice, the *profiling* analysis made, enables to identify at step **P6** the next future values concerning the interactions that are likely to be made and the type of contents more enjoyable. On the basis of this forecast, a profile variation is introduced in the same step **P6.** Of course, as a result of such a predictive analysis and against a critical utilization of the service, it shall be possible to take at step **P7** *correction* measures as for the type of contents sent and of interactions proposed, up to completion of the service contemplated at step **P8.** This approach enables an optimization of the system utilization.

In the assumptions on fruition considered up to now, it has been assumed that, at the use starting time, a carousel of contents is shown to the end user, starting from *a priori* considerations made before hand on the possible preference type for the user range in which the single user is placed. After the *profiling* analysis on the cases acquired, it will be possible to infer on the new users subscribing to the service, identifying the closest existing profile to the same. Therefore, the same typology of contents proposed to the user already acquired, whose *semi-static* profile is more similar to that of the new user, shall be proposed to each new user. This shall be possible through a dedicated *clustering* analysis.

Concerning the analysis of the historical series relating to the variables of the $T^h$ and/or $N^m$ type and their subsequent forecast, it is possible to refer to the many methods present in the literature. Among these, a preferred algorithm is that based on a learning rule variable in time that can be referred to the capability of generalization of the neural networks, which is described in the following bibliography:

- A. Ballarin, S. Gervasi, V. Cannatà: A classification neural algorithm using a time varying learning rule; *invited paper* at the *First International Conference on Neural Parallel and Scientific Computation*; Atlanta, USA, 1995;
- A. Ballarin, S. Gervasi: Political Surveys and Scenario Simulations; papers of the Second International Conference on Cognitive and Neural Sciences, Boston, May 1998, USA;
- A. Ballarin, S. Gervasi, F. Giancarli, F. Cecere: A Categorization Methodology for the Analysis of the Mortality Rate in Psychiatric Hospitals; papers of the International Joint Conference on Neural Networks, Como, July 2000, Italy.

Other valid methods to this purpose and universally known are those related to the works made by U.S. organizations such as Gallup or Harris in the forecast of poll results. The sum of the teachings mentioned above leads to the definition of the profiling and prediction software installed in the computer of the PROFILE SERVER block.

The hardware and software technical means that the present invention foresees to employ at the user station are all confined in a DATA COLLECTOR, inclusive of remote control. The purchase of the DATA COLLECTOR by the user, or its lease by the provider at the time of service subscription, are matters of mere commercial opportunity that are not related to the invention.

The hardware and software technical means that the present invention foresees to employ in the profile server of the provider are confined in the PROFILE SERVER block, partly already described above.

The DATA COLLECTOR is connected to the home telephone set through a multiple telephone socket, and to the television set through a SCART plug. In addition to the means shown in Figures 2 and 3, namely those specific in the telephone Interface, the DATA COLLECTOR includes a system software stored in the Hard Disk, a firmware stored in a ROM (not shown in Fig.2 for simplicity), and an application software also installed in the Hard Disk. The system software includes the operating system of the CPU microprocessor, the bootstrap software, the drivers of the different devices used, the modem control software, the infrared interface, etc.

The application software includes:

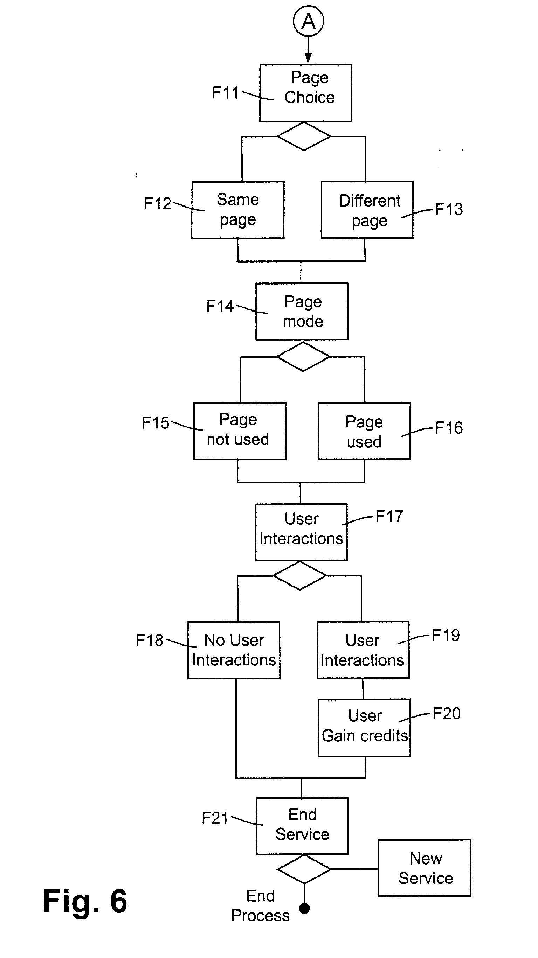

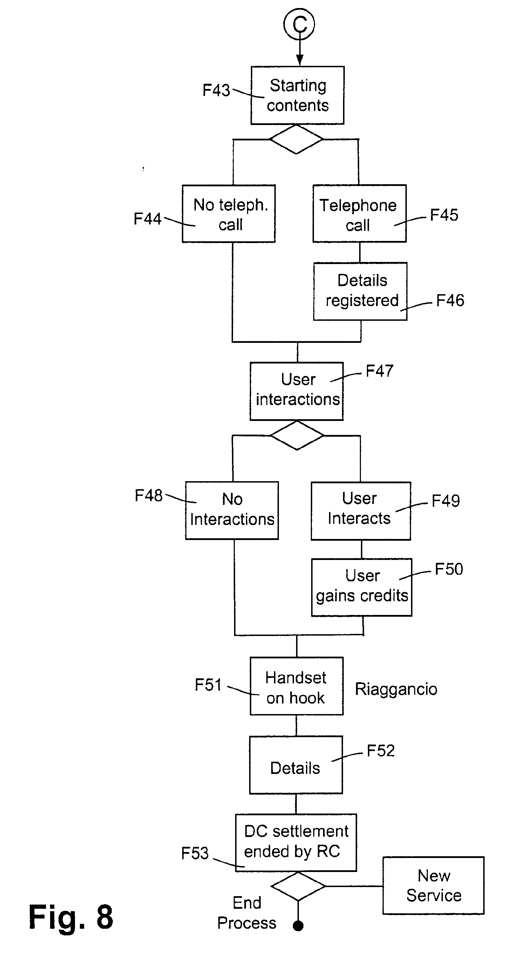

- a module for the recording of the user data;
- a module for the coordination of interactions between telephone set, DATA COLLECTOR, remote control, and TV set, shown in **Figures 6 to 10.**
- a module for the acquisition of the service typical multimedia contents from the Teletext channel and their storage on file in the Hard Disk;
- a module for recording the interactions on the image contents and their storage on file in the Hard Disk. It must be pointed out that the contents subject to interaction through remote control are highlighted for the navigator, preferably with a color change;
- a module for the transmission to the provider of the interaction file;
- a module for the reception of the updated profile and storage in a profile file;
- a module for the selection of the Teletext contents on the basis of the current profile;
- a software interface to a profile server (provider side), to enable the inspection and control of certain operation parameters at the user station;
- a module for the generation of a loyalty mechanism centred on the distribution of credits associated to icons in the form of golden tokens, issued at random time intervals and allowed to glide at an appropriate speed along the TV screen aside the service contents, until they disappear when the screen edge is reached. The module has provisions for checking the match of the interactions on the tokens gliding along the screen and then disappearing. The interaction on the tokens is equivalent to a capture to be stored together with the other interactions. The criteria for issuing the credits, initially provided by the manufacturer can be reprogrammed through the software interface module towards the provider.

The PROFILE SERVER includes a computer having network server characteristics, equipped with an application software including:

- a communication module controlling the modem connections between the plurality of users and the service provider (advertiser), and vice versa;
- an acquisition module for the files storing the interactions made by the users;
- a computing/updating module for the individual profiles of all the users;
- a module for the variation of profiles and the definition of new contents to be proposed;
- a module for accounting the credits accumulated by each user.

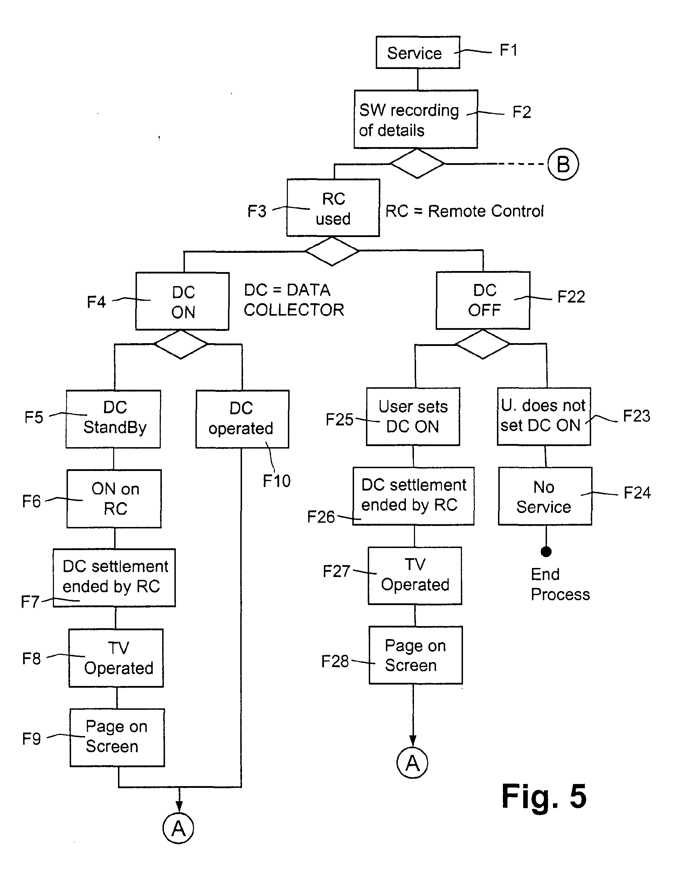

With reference to **Figures 5 to 9,** we shall deal now with the software portion controlling the coordination of the interactions between telephone set, DATA COLLECTOR, remote control, and TV set. The description of this software can be referred to the theory of structured programming according to the Warnier methodology, which deliberately ignores the instruction of conditioned skip and generates a binary tree of conditions. The criterion selected to number the different steps is that to enter one of the two branches of an initial root and run it all along a path of dichotomous sequential choices leading to a final status, afterwards we return to the starting root and operate in the same way for the second branch. The same criterion is applied to each branching encountered along the different service start → service end paths. At each branching point, the block placed over the rhombus-shaped branching element indicates the condition that the two deriving sub-conditions refer to. From the operational point of view a conditional block is equivalent to an interrogation on the status of one or more "sense-points" records storing the current status of the variable considered. The processing step implied in a conditional block will be called conditional step. The diagram indicates at box **F1** in **Fig.5** the presence of an interactive service with a central provider; the service asks, at conditional step **F2,** an initial recording of the user integrated by other details useful for the profiling. The system proposes to this purpose to fill in an on-screen table, then it puts the condition of the alternative use of remote control/telephone set for the service start. Of course the selection placed at step **F2** is not so drastic as it appears from the symbolic representation of the flow-chart, and requires an interpretation. The possibilities envisaged in the condition placed at step **F2** are the following, the implementation choice being left free:

- installation of a pushbutton on the front of the DATA COLLECTOR, with associated blue LED, for the enabling/ disabling of the telephone context integrated in the service fruition;
- presentation of an interactive field on the TV screen for the enabling/disabling of the telephone context through remote control;
- remote enabling/disabling by the provider on user's request.

The first implementation, through a pushbutton, requires circuit (not shown, in consideration of its simplicity) that transforms the pressure on the button into a transition of voltage logic level at a dedicated input of the Sense point register of **fig.3a** included in the Telephone Interface of **fig.2.** The CPU normally performs the polling of the Sense point register to acquire the signals of interest generated in the Telephone Interface, among which the above indicated one. At conditional step **F2,** the program interprets in the appropriate way this signal allowing or not, the continuation of the execution towards step **F3,** relevant to the option on the remote control, or towards **F29,** relevant to the telephone set. A similar reasoning applies also to the other two switching modes. Now, which is the meaning to be ascribed to such a switching? obviously, it would be too detrimental to the service if it were started only and solely by an outgoing telephone call. It is more logic and even more convenient to leave the user free to start a service fruition session when he or she so desires, even when the switch is moved towards the telephone set. In this case, in fact, the navigation is already in progress and there is no need to start it by means of the telephone set. A possible meaning of the choice of service start on telephone call could be to attribute to the telephone connection the tokens captured during the navigation on the TV screen.

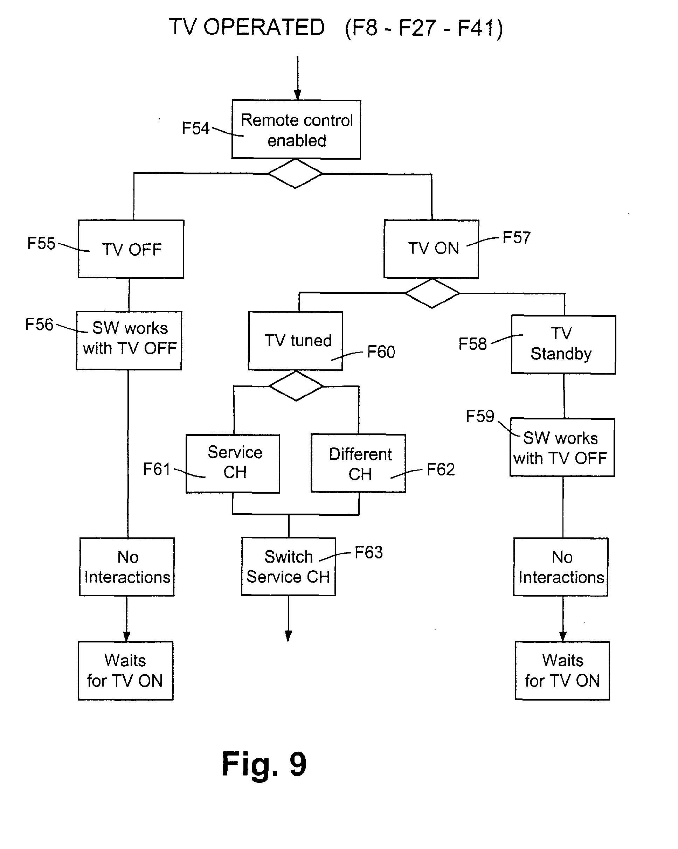

Following the remote control branch, we encounter a conditional step **F3** relevant to the on/off status of the DATA COLLECTOR of Fig.2. Following the ON way, we encounter a conditional step **F4** relevant to the standby/operated condition of the DATA COLLECTOR, indicated by the lighting of a yellow LED for the standby status and of a green LED for operation. Selecting the left branch, the next step **F5** indicates the standby choice. At the next step **F6,** the user presses ON on the remote control, and at step **F7** he completes the selection of the Teletext channel of the provider on the remote control. At this point the program performs the step **F8** (corresponding to Fig.9) to recall on the TV screen the service multimedia contents, as indicated in the next step **F9,** which terminates the branch originated at the conditional step F4. Going back to the conditional step F4, the program follows now the right branch and encounters step **F10** which indicates, by lighting a green LED, the operation condition of the DATA COLLECTOR on the channel of the provider. Steps F9 and F10 meet at a point **A** of the flow-chart, which coincides with a conditional step **F11** relevant to the choice of the page on the TV screen. Step **F12** indicates that the user maintains the same page that the system shows on the TV screen, while step **F13** indicates that the user prefers to change the page. Steps F12 and F13 meet in the conditional step **F14** relevant to the use, or not, of the current page. Step **F15** indicates that the user is not using the page on the screen, that is, he is not making any interaction on the multimedia contents proposed, other than the credit tokens, while step **F16** indicates the contrary condition. Steps F15 and F16 meet in the conditional step **F17** relevant to the verification whether interactions with the remote control on the tokens are performed or not, with their capture and saving in the memory. Step **F18** indicates that no capture has been made, while steps **F19** and **F20** indicates one or more captures with gain of the relevant credit. Steps F18 and F20 meet in the conditional step **F21** relevant to the end of the procedure or to the introduction of a new session of the interactive service. In both cases, a session of the program following the left branch departing from point F3 on the binary tree is terminated.

We examine now a session in which the program, after reaching the conditional step F3, enters the right branch joining the conditional step **F22,** in which the DATA COLLECTOR remains in a particular OFF situation, indicated by the lighting of a red LED. In F22 the DATA COLLECTOR is not actually off, but its interfacing to the remote control is disabled. In fact, the DATA COLLECTOR is always powered, since it must be able to update in the memory the information it receives on the VBI channel at intervals of approximately one hour, and must also perform the full-duplex automatic communication functions with the profile server scheduled for night hours. The conditional step **F22** is relevant to the condition whether the user turns on, or does not turn on, the DATA COLLECTOR. Selecting in F22 the right branch, the step **F23** indicates the choice of the user not to switch on: consequently, the step **F24** indicates the non existence of the service and the end of the process, by ending the right branch originated at the conditional step F22. On the contrary, choosing in F22 the left branch, the choice is to switch on the DATA COLLECTOR at step **F25.** In the next step **F27** the user completes the selection of the provider's Teletext channel by means of the remote control. At this point, the program performs the step **F27** (corresponding to Fig.9) to recall the service multimedia contents on the TV screen, as indicated in the next step **F28,** bringing the program to point **A** already mentioned before. This means that from this point on the operations of **Fig.6** are verbatim repeated.

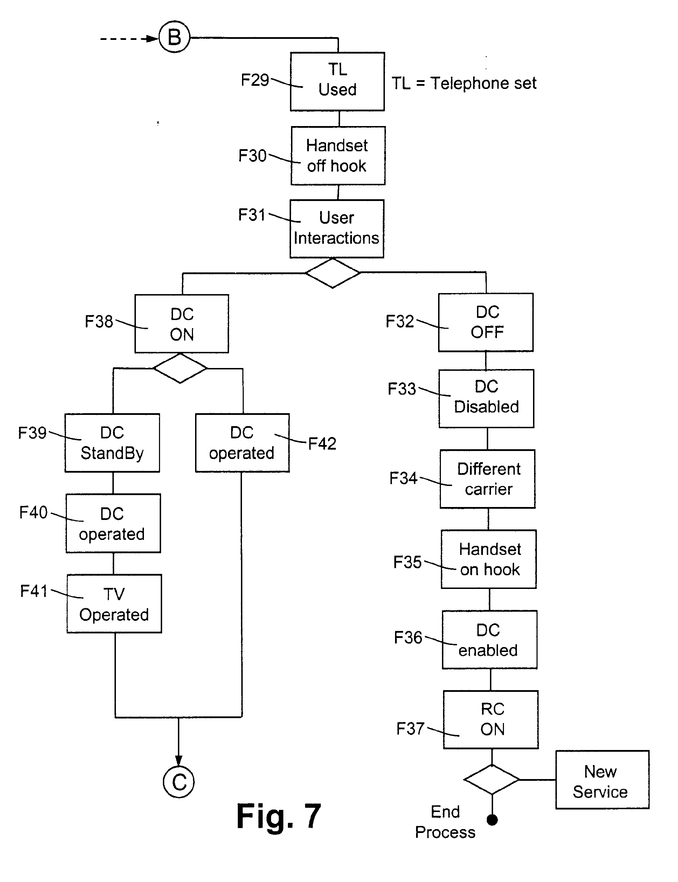

We examine now a session in which the program, initially starting from the conditional step **F2** relevant to the alternative use of remote control/telephone set, enters the right branch, passes point **B,** reaching the step **F29** in **Fig. 7** in which the choice made is that of using the phone. The next step **F30** indicates that the user has lifted the handset. The execution of step F30 consists in the interrogation by the CPU processor to the output of the off-hook detector included in the Telephone Interface of **Fig.2,** detecting the presence of direct current in the 2-wire loop. The on-hook condition of the handset is detected, by exclusion, by the same sensor. The program reaches then the conditional step **F31** relevant to the issue whether the interaction with the service contents is possible, or not. Selecting the right branch, referred to the impossibility of interacting with the contents, the program reaches step **F32** corresponding to the turn off condition of the DATA COLLECTOR indicated by the lighting of the red LED. The next step **F33** indicates the disabling of the use of the remote control. The step **F34** indicates a situation in which the user is availing of the telephone communication to receive the service of another provider enabled to telecast during the VBI interval. Step **F35** indicates that the user hooked the handset ending the call underway. The step **F36** indicates that the user has removed the disabling on the remote control. The next conditional step **F37** indicates that the user performs only the DATA COLLECTOR turn on control from the remote control, causing either the process termination or the start of a new service session.

We examine now a session in which the program, after reaching the conditional step **F31,** enters the left branch, relevant to the possibility of interacting through the remote control. This branch leads to the conditional step **F38** relevant to the standby/operated condition of the DATA COLLECTOR. Selecting the left branch, the next step **F39** reveals the standby choice. At the next step **F40** the user presses ON on the remote control. At this point the program performs the step **F41** (corresponding to Fig.9) to recall on the TV screen the service multimedia contents, thus ending the branch originated at the conditional step F38. Selecting at step F38 the right branch, the next step **F42** indicates the selection of DATA COLLECTOR operated. Steps F41 and F42 meet at a point **C** of the flow chart, coinciding with the conditional step **F43** relevant to the start of the contents on the screen in presence, or not, of the offsetting up of a call after the handset has been lifted in the previous step F30. Selecting the left branch, the program performs the step **F44,** in which the CPU processor interrogates the output of the voice signal detector on the 2-wire loop, included in the Telephone Interface of **fig.2,** and determines that no call has been sent or is underway. On the contrary, selecting the right branch, the program performs the step **F45** in which the microphone activity detector on the 2-wire loop indicates the presence of an important power signal in the voice band (300 ÷ 3.400 Hz); this signal may result either from dialing underway or from the normal conversation. Steps **F44 and F45** have an impact with the preferred embodiment of the loyalty mechanism, because they enable to discriminate between the role of the user as caller/called. It is quite evident that the service provider could be interested in distinguishing this condition, in order not to credit free minutes of telephone conversation when the user is called and therefore he does not need this type of incentive. This discrimination is dropped whenever the provider agrees to confer the credits earned by the called person to free future telephone calls made by the same. The possibility to distinguish the caller and the called is due to the fact that, once the off hook is detected, there is a pre-set time within which dialing has to be made, which can be either impulse or multitone. In both the cases a signal is produced on the 2-wire loop. The off hook detector and the signal detector placed on the 2-wire loop, can detect the presence of the impulse and multi-tone dialing.

In the subsequent step **F46** the condition of call present is recorded by the software governing the user interactions, as well as the detail of interactions made on the contents scrolling on the screen. The two branches originated in F43 meet in the conditional step **F47** relevant to the check whether the interactions through the remote control on the tokens with relevant capturing and saving in the memory are performed or not. The step **F48** indicates that no capture has been made, while steps **F49** and **F50** indicate one or more captures with gain of the relevant credits. Steps F48 and F50 meet in step **F51** in which the off hook detector monitors that the user has hooked the handset. In the subsequent step **F52** the software shows on the TV screen the detail of interactions made during the telephone call, and at the conditional step **F53** completes on the remote control the desired selection, causing either the end of the process, or the start of a new service session.

The subroutine corresponding to the automatic control of the television set invoked at steps **F8, F27, and F41** is now described. This subroutine is introduced at the conditional step **F54** which, starting from a situation where the DATA COLLECTOR has been completely set on the Teletext channel of the provider by means of the remote control, controls on/off conditions of the TV set. Following the left branch, the program reaches the step **F55** (TV off), and proceeds to step **F56** in which the software continues to carry out its work in the DATA COLLECTOR concerning the communication with the profile server on the VBI channel, the batch transmission of the previous interactions, the reception of the updated profiles, and the selection of the contents. Staying in step 56 coincides with the impossibility to perform interactions on the TV screen and the consequent wait for the television set to be enabled to full operation. Considering that the right branch branches from the conditional step **F54,** the program encounters an additional conditional step **F57** characterized by the On status of the television set, in which the problem arises to control the tuning or standby state of the television set. Considering the right branch, the program enters the standby step **F58,** and then step **F59** in which the case treated at step F56 reappears. On the contrary, considering the right branch, the program enters a conditional step **F60** characterized by the status of the television set tuned, where the condition is placed on which channel the set is tuned. The subsequent steps **F61** or **F62** are referred to a tuning on the provider channel or on a different channel, respectively. The two steps meet in a step **F63** in which the tuning on the different channel is switched on the provider channel.

**Claims**

1. Broadcast transmission method of multimedia contents from a service centre towards a plurality of users/subscribers through a narrow-band sub-channel associated to a broader band television channel, where said contents are selectively delivered to the users on the basis of an individual profile built through accumulation in time and processing the interactions performed by the users, through the remote control, on some interactive field of said multimedia contents enjoyed on the television screen, **characterized in that:** said multimedia contents include icons emitted at random time intervals, associated to credits that can be enjoyed interacting on said icons remaining on the screen for a limited time, preferably gliding along the screen.

2. Broadcast method according to claim 1, **characterized in that** the fruition of said contents on the television screen is originated by a telephone call, and said credits correspond to minutes of free telephone conversation.

3. Transmission method according to claim 2, **characterized in that** said service fruition originated by the telephone call is enabled by the user at will.

4. Transmission method according to one of the previous claims, **characterized in that** it includes the following steps:

   a) transmitting said multimedia contents from the service operator towards said plurality of users;
   b) receiving said multimedia contents at the user station and storing the interactions made on said multimedia contents within a defined time interval;
   c) transmitting the interactions stored by each single user station to the service operator for the generation of individual user profiles;
   d) transmitting the individual user profiles from the service operator towards each user;
   e) filtering said multimedia contents received at the user station on the basis of match criteria between said contents and said individual user profile, obtaining a selection of said multimedia contents that can be enjoyed by the user through a multimedia display device (TV).

5. Transmission method according to one of the previous claims, **characterized in that** said profile consists of a semi-static portion enclosing the elements enabling to unambiguously identify the service user, and of a dynamic portion based on said stored interactions.

6. Transmission method according to one of the previous claims **characterized in that** said interactions stored are used to forecast on statistical basis future interactions on multimedia contents.

7. Transmission method according to claim 6, **characterized in that** said forecast on statistical basis employs a neuronal algorithm based on a learning rule variable in time.

8. Transmission method according to claim 6 or 7, **characterized in that** said future interactions are used to modify the user profile in a congruent way.

9. Transmission method according to any claim 6 to 8, **characterized in that** said future interactions are used by the service operator to propose preferred multimedia contents to the users.

10. Transmission method according to any claim 5 to 9, **characterized in that** the same multimedia contents proposed to a user already acquired, whose semi-static profile is more similar to that of the new user, are proposed to each new user.

**11.** Transmission method according to one of the previous claims, **characterized in that** an analogue television signal is transmitted on said broader band television channel, and said narrow band sub-channel is the Teletext channel, either fully or partly utilized.

**12.** Transmission method according to any claim 1 to 10, **characterized in that** a television signal of the digital type is transmitted on said broader band television channel, and said narrow band sub-channel is a sub-channel of the compressed digital signal.

**13.** Interactive television system including:

- a service centre (PROFILE SERVER) where an operator edits the multimedia contents to be transmitted to a plurality of users/subscribers operates;
- one transmitting station (Coordination Station, TV Carrier) where said multimedia contents are inserted in a narrow band sub-channel associated to a broader band television channel for broadcasting;
- a plurality of user stations, each equipped with a receiver (DATA COLLECTOR, Tuner/Demodulator) of said broadcast signal, and said receiver including:
- decoding means (VBI Decoder) of the multimedia contents included in said narrow band sub-channel;
- means for displaying (Audio/Video Processor) said multimedia contents on the television screen (TV) ;
- remote control means (REMOTE CONTROL, Infrared Receiver, CPU) for interacting on the fields of said interactive multimedia contents displayed on the television screen (TV);
- means (Hard Disk) for the storage of interactions made with the remote control means;
- control means of the receiver (CPU);
- software means for the selection of a sub-set of said interactive multimedia contents to be supplied to said display means (Audio/Video Processor), on the basis of a user individual profile obtained from the processing of the stored interactions,

**characterized in that**: said multimedia contents include icons emitted at random time intervals, associated to credits that can be enjoyed interacting on said icons appearing on the screen for a limited time, preferably gliding along the screen.

**14.** Interactive television system according to claim 13, **characterized in that** each one of said user station additionally includes a telephone set (TEL) connected to the telephone network (PSTN) and to a telephone interface (Telephone Interface) belonging to said receiver (DATA COLLECTOR), and that the telephone interface includes an off-hook detector (Off-hook detector) of the handset of the telephone set (TEL), connected to said control means of the receiver (CPU) sensing the occurrence of an off-hook condition and enabling the fruition on the TV screen of said interactive multimedia contents, and of said icons whose capture determines the emission of credits corresponding to minutes of free telephone conversation.

**15.** Interactive television system according to claim 14, **characterized in that** said off-hook detector (Off-hook detector) is suitable to detect the decadic pulse dialing on the telephone 2-wire loop, and that said tokens are distributed after an originated telephone call.

**16.** Interactive television system according to claim 14, **characterized in that** said telephone interface (Telephone Interface) includes also an inband signal detector suitable to detect the tones present on the telephone 2-wire loop during a multifrequency selection, and that said credits can be distributed after an originated telephone call.

**17.** Interactive television system according to any claim 14 to 16, **characterized in that** said receiver (DATA COLLECTOR) also includes means (Sense point register, CPU) which can be operated by the user at will to enable, or disable said fruition on the TV screen of said interactive multimedia contents originated by a telephone call.

**18.** Interactive television system according to any claim 13 to 17, **characterized in that** said receiver (DATA COLLECTOR) also includes a full-duplex modem (Modem) connected to the telephone 2-wire loop through said telephone interface (Telephone Interface) and to said control means of the data collector (CPU), from which said stored interactions are received at pre-set time intervals to be transmitted to said Profile server (PROFILE SERVER).

**19.** Interactive television system according to any claim 13 to 18, **characterized in that** said Profile server (PROFILE SERVER) includes:

- means (Telephone Interface) suitable to receive said stored interactions transmitted by all the users;
- processing means (Computer for data collection / management) suitable to the processing of the above mentioned stored interactions received by all the users, for the determination and updating of said user profiles on an individual basis;
- means (Telephone Interface) suitable to transmit said updated user profiles towards the relevant users at preset time intervals.

**FIG.1**

FIG.2

## Simplified TELEPHONE SET

**Fig. 3**

## 2-WIRE LOOP DETECTORS

**Fig. 3a**

**Fig. 4**

Service —— F1

SW recording of details —— F2

B

F3 —— RC used    RC = Remote Control

F4 —— DC ON    DC = DATA COLLECTOR    DC OFF —— F22

F5 —— DC StandBy    DC operated    User sets DC ON —— F25    U. does not set DC ON —— F23

F10

F6 —— ON on RC    DC settlement ended by RC —— F26    No Service —— F24

F7 —— DC settlement ended by RC    F27 —— TV Operated    End Process

F8 —— TV Operated    F28 —— Page on Screen

F9 —— Page on Screen

A    A

**Fig. 5**

Ⓐ

F11 — Page
Choice

F12 — Same
page

Different
page — F13

F14 — Page
mode

F15 — Page
not used

Page
used — F16

User
Interactions — F17

F18 — No User
Interactions

User
Interactions — F19

User
Gain credits — F20

F21 — End
Service

New
Service

End
Process

# Fig. 6

F29 — TL Used    TL = Telephone set

F30 — Handset off hook

F31 — User Interactions

F38 — DC ON

F32 — DC OFF

F33 — DC Disabled

F39 — DC StandBy

DC operated — F42

F34 — Different carrier

F40 — DC operated

F35 — Handset on hook

F41 — TV Operated

F36 — DC enabled

F37 — RC ON

New Service

End Process

## Fig. 7

Ⓒ

F43 — Starting contents

F44 — No teleph. call

Telephone call — F45

Details registered — F46

User interactions — F47

F48 — No Interactions

User Interacts — F49

User gains credits — F50

F51 — Handset on hook          Riaggancio

Details — F52

DC settlement ended by RC

F53

End Process

New Service

**Fig. 8**

TV OPERATED (F8 - F27 - F41)

```
                    ┌─────────────────┐
         F54 ──────►│  Remote control │
                    │     enabled     │
                    └────────┬────────┘
                          ◄─────►
        ┌────────────────────┴────────────────────┐
  ┌──────────────┐                          ┌──────────────┐
  │F55│  TV OFF  │                          │   TV ON  │F57│
  └──────┬───────┘                          └──────┬───────┘
         │                                     ◄─────►
         │                        ┌────────────────┴──────────────┐
  ┌──────┴───────┐         ┌──────────────┐              ┌──────────────┐
  │F56│ SW works │         │  TV tuned    │              │F58│   TV     │
  │   │with TV OFF│        │         F60  │              │   │ Standby  │
  └──────┬───────┘         └──────┬───────┘              └──────┬───────┘
         │                     ◄─────►                          │
         │            ┌───────────┴──────────┐           ┌──────┴───────┐
         │     ┌──────────────┐     ┌──────────────┐     │F59│ SW works │
         │     │F61│ Service  │     │  Different   │     │   │with TV OFF│
         │     │   │   CH     │     │    CH    F62 │     └──────┬───────┘
         │     └──────┬───────┘     └──────┬───────┘            │
  ┌──────┴───────┐    └──────────┬─────────┘            ┌──────┴───────┐
  │     No       │         ┌──────────────┐             │     No       │
  │ Interactions │         │  Switch  F63 │             │ Interactions │
  └──────┬───────┘         │ Service CH   │             └──────┬───────┘
         │                 └──────┬───────┘                    │
  ┌──────┴───────┐                ▼                     ┌──────┴───────┐
  │    Waits     │                                      │    Waits     │
  │  for TV ON   │                                      │  for TV ON   │
  └──────────────┘                                      └──────────────┘
```

# Fig. 9

European Patent
Office

## EUROPEAN SEARCH REPORT

Application Number

EP 00 83 0808

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 51031 A (INTEL CORPORATION) 7 October 1999 (1999-10-07)<br><br>* page 2, line 21 - page 11, line 15 *<br>* figures 1-4 *<br>--- | 1,4-6, 11-13, 18,19 | H04N7/16 H04N7/173 |
| A | WO 00 59214 A (TIVO INC) 5 October 2000 (2000-10-05)<br>* page 9, line 18 - page 16, line 9 *<br>* page 20, line 13 - line 29G24; claim 17; figure 7; example 33 *<br>* figures 1-8,14-33 *<br>----- | 1,4-14, 18,19 | |

TECHNICAL FIELDS
SEARCHED    (Int.Cl.7)

H04N

The present search report has been drawn up for all claims

| Place of search | Date of completion of the search | Examiner |
|---|---|---|
| THE HAGUE | 9 July 2001 | Van der Zaal, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 83 0808

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2001

| Patent document cited in search report | | Publication date | Patent family member(s) | | Publication date |
|---|---|---|---|---|---|
| WO 9951031 | A | 07-10-1999 | US | 6075971 A | 13-06-2000 |
| | | | AU | 3115399 A | 18-10-1999 |
| | | | CN | 1295764 T | 16-05-2001 |
| | | | EP | 1075764 A | 14-02-2001 |
| WO 0059214 | A | 05-10-2000 | AU | 3521600 A | 16-10-2000 |
| | | | AU | 3871700 A | 16-10-2000 |
| | | | AU | 3878600 A | 16-10-2000 |
| | | | AU | 4057100 A | 16-10-2000 |
| | | | AU | 4066700 A | 14-11-2000 |
| | | | AU | 4185800 A | 16-10-2000 |
| | | | AU | 4185900 A | 14-11-2000 |
| | | | AU | 4186000 A | 14-11-2000 |
| | | | WO | 0058833 A | 05-10-2000 |
| | | | WO | 0058834 A | 05-10-2000 |
| | | | WO | 0059223 A | 05-10-2000 |
| | | | WO | 0058967 A | 05-10-2000 |
| | | | WO | 0062298 A | 19-10-2000 |
| | | | WO | 0062533 A | 19-10-2000 |
| | | | WO | 0062299 A | 19-10-2000 |

EPO FORM P0459

For more details about this annex : see Official Journal of the European Patent Office, No. 12/82